# FASCICULE DE BREVET EUROPEEN

(11) **EP 2 087 460 B1**
(45) Date de publication et mention de la délivrance du brevet: **04.05.2016**
(21) Numéro de dépôt: 07870248.7
(22) Date de dépôt: 06.11.2007
(51) Int. Cl.: G06K 19/077

(54) **DISPOSITIF D'IDENTIFICATION PAR RADIOFRÉQUENCE ET PROCÉDÉ DE RÉALISATION D'UN TEL DISPOSITIF**
HOCHFREQUENZIDENTIFIKATIONSEINRICHTUNG UND VERFAHREN ZUR HERSTELLUNG DER EINRICHTUNG
RADIOFREQUENCY IDENTIFICATION DEVICE AND METHOD FOR PRODUCING SAID DEVICE

(30) Priorité: 06.11.2006 FR 0609666
(43) Date de publication de la demande: 12.08.2009
(73) Titulaire: ID3S - Identification Solutions Systems & Services, 69100 Villeurbanne (FR)
(72) Inventeur: CHARRIN, Philippe, 69100 Villeurbanne (FR)
(74) Mandataire: Delorme, Nicolas
(86) Numéro de dépôt international: PCT/FR2007/001829
(87) Numéro de publication internationale: WO 2008/065278

(56) Documents cités:
- EP-A- 1 559 653
- EP-A- 1 630 730
- WO-A-03/030093
- WO-A-03/067512
- US-A- 6 147 604
- US-A1- 2002 188 259
- US-B1- 6 371 380

## Description

La présente invention concerne un dispositif d'identification par radiofréquence, ainsi qu'un procédé de réalisation d'un tel dispositif.

Les dispositifs d'identification par radiofréquence (dispositifs RFID) permettent d'identifier des objets en utilisant un dispositif électronique - tel qu'une puce mémoire - contenant des données et capable, à l'aide d'une antenne, de transmettre des informations à un lecteur spécialisé. Une étiquette d'identification ou une carte de paiement sans contact sont des exemples de tels dispositifs RFID.

Il est connu du document US6371380 un dispositif de stockage d'information du type de fonctionnement sans contact notamment appliqué sur des étiquettes pour produits utilisées dans un processus de distribution et du contrôle des stocks.

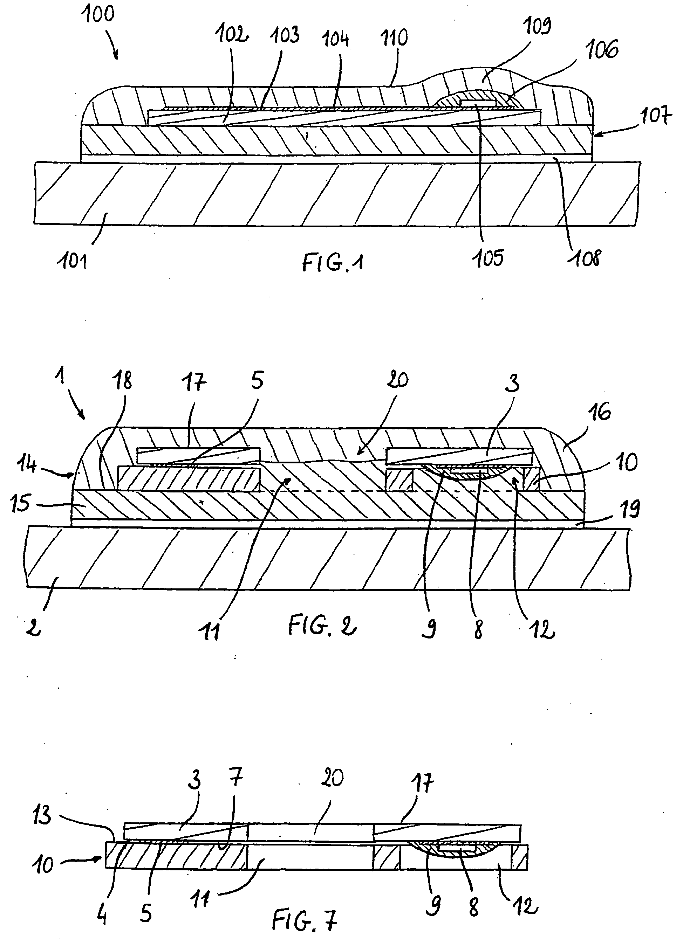

Par ailleurs, la figure 1 représente une vue en coupe d'une étiquette RFID 100 de l'art antérieur apposée sur un support 101. L'étiquette 100 comprend un substrat 102 sur une face 103 duquel est réalisée une antenne 104 et disposée une puce 105 connectée à l'antenne 104. En outre, un enrobage 106 (potting) recouvre localement cette face 103 du substrat 102 au niveau de la puce 105. L'ensemble formé du substrat 102, de l'antenne 104, de la puce 105 et de l'enrobage 106 est entouré d'une enveloppe 107. Une couche d'adhésif 108 permet la fixation de l'étiquette 100 sur le support 101.

La puce 105 et l'enrobage 106 forment une zone en saillie par rapport à l'antenne 104.

En conséquence, d'une part, la réalisation de l'enveloppe 107, par exemple par laminage, peut conduire à une détérioration de la puce 105 et nuire au bon fonctionnement de l'étiquette.

D'autre part, comme illustré sur la figure 1, l'étiquette 100, une fois réalisée, présente un bossage 109 au droit de la puce 105. De ce fait, il existe un risque que l'étiquette 100 apposée sur le support 101 puisse être décollée lorsqu'une personne ou un objet vient buter contre le bossage 109. En outre, la face apparente 110 de l'étiquette 100, c'est-à-dire la face de l'enveloppe 107 opposée à la couche d'adhésif 108, n'étant pas plane, les impressions qui pourraient y être réalisées ne seraient pas d'une qualité satisfaisante. Ainsi, l'étiquette présenterait un aspect peu esthétique. Cela pourrait même conduire à des problèmes de lecture de ces informations.

Un autre inconvénient des dispositifs RFID connus est qu'ils ne peuvent pas être apposés sur un support métallique, ou utilisés au voisinage proche d'un objet métallique, car le métal empêche la bonne transmission des informations contenues dans la puce au moyen de l'antenne.

Par ailleurs, la plupart des étiquettes RFID connues présentent une rigidité trop importante, ce qui fait que ces étiquettes ne peuvent pas être placées sur des supports gauches. Cette rigidité est très souvent due à l'épaisseur importante de ces étiquettes.

La présente invention vise à remédier aux inconvénients mentionnés ci-dessus.

A cet effet, et selon un premier aspect, l'invention concerne un dispositif d'identification par radiofréquence (dispositif RFID) comprenant, noyé dans une enveloppe, un substrat sur une face duquel est réalisée une antenne et disposée une puce connectée à l'antenne, un enrobage recouvrant localement ladite face du substrat au niveau de la puce. Le dispositif d'identification par radiofréquence comprend en outre, noyé dans l'enveloppe, une couche intermédiaire réalisée en un matériau hyper conducteur magnétique contenant de la ferrite, placée contre le substrat, du côté de l'antenne, ladite couche intermédiaire possédant des dimensions supérieures à celles de l'antenne de sorte à pouvoir la recouvrir, et présentant une cavité agencée pour que l'enrobage et la puce puissent s'y loger sensiblement totalement.

Par « noyé dans l'enveloppe », on entend que l'enveloppe enrobe totalement l'ensemble formé par le substrat, l'antenne, l'enrobage et la couche intermédiaire, sans que cette expression limite le mode de réalisation de l'enveloppe au moulage, par exemple.

Grâce à la couche intermédiaire protégeant l'antenne, l'apposition du dispositif RFID sur un objet métallique ne nuit pas à la transmission des informations contenues dans la puce.

En outre, le fait de prévoir une cavité dans la couche intermédiaire pour loger l'enrobage présente de nombreux avantages :
- l'augmentation de l'épaisseur totale du dispositif RFID, due à la présence de la couche intermédiaire, est limitée et au moins en partie compensée par le fait que l'épaisseur de l'enrobage ne vient pas s'ajouter à l'épaisseur des autres couches constitutives du dispositif RFID. Le dispositif RFID présente donc une épaisseur peu importante, malgré la couche intermédiaire. Ainsi, en particulier lorsque le dispositif RFID forme une étiquette, et selon les matériaux utilisés, il peut présenter une rigidité suffisamment faible pour pouvoir être courbé et apposé sur un support gauche. De plus, une fois apposé sur le support, le dispositif RFID n'offre que peu de prise et les risques qu'il soit arraché du support s'en trouvent donc réduits ;

- il n'existe plus de surépaisseur du dispositif RFID au niveau de la puce, la face apparente du dispositif RFID ne comportant donc pas de bossage. Ceci permet de réaliser sur cette face des impressions de très bonne qualité. En outre, la résistance du dispositif RFID à l'arrachement par rapport à son support est considérablement diminuée par la suppression du bossage localisé de l'art antérieur ;
- la puce et son enrobage étant logés dans la cavité, ces éléments sont protégés lors de la réalisation de l'enveloppe.

Il est à noter que la cavité ménagée dans la couche intermédiaire est localisée, et n'a donc pas de conséquence négative sur la fonction d'hyper conducteur magnétique de cette couche intermédiaire.

Avantageusement, l'enrobage est complètement contenu dans la cavité de la couche intermédiaire, c'est-à-dire que son épaisseur est inférieure à celle de la couche intermédiaire. Une réalisation dans laquelle l'enrobage dépasserait légèrement de la couche intermédiaire est toutefois envisageable.

L'invention permet de réaliser des étiquettes RFID pouvant être apposées sur des cylindres métalliques contenant des gaz ou des liquides sous pression tels que des extincteurs, des bouteilles de plongée ou des bouteilles d'air utilisées par les pompiers. Plus généralement, une telle étiquette peut permettre d'identifier les différents équipements utilisés par les pompiers (casque, détendeur, veste, etc.) et de suivre chacun de ces équipements lors des différentes opérations qu'ils subissent au cours de leur durée de vie : requalification obligatoire, visite de contrôle cyclique, maintenance, lavage, gonflage, etc. Bien entendu, ces applications ne sont pas limitatives.

Selon une réalisation possible, la couche intermédiaire est réalisée en un matériau supra conducteur de radiofréquence contenant de la ferrite.

L'épaisseur de la couche intermédiaire est par exemple comprise entre 200 et 600 µm.

La cavité ménagée dans la couche intermédiaire peut être un orifice traversant, par exemple de diamètre compris entre 4 et 8 mm.

Avantageusement, l'antenne forme un anneau et la couche intermédiaire comporte un trou traversant disposé en regard d'un trou traversant ménagé dans la zone centrale délimitée par l'anneau. Ceci permet de créer une zone d'adhésion supplémentaire entre la partie de l'enveloppe située du côté du substrat et la partie de l'enveloppe située du côté de la couche intermédiaire, ce qui améliore la tenue de l'ensemble.

L'enveloppe est par exemple réalisée en un ou plusieurs matériaux choisis, en fonction des contraintes de température à supporter, parmi les silicones, les polyuréthanes, les polyéthylènes, les polyamides, tandis que le substrat peut être réalisé en un matériau choisi parmi le PET (polyéthylène téréphtalate), le PVC (polychlorure de vinyle), un composite fibre de verre / résine époxy.

En outre, le dispositif RFID peut comporter une couche d'adhésif solidaire d'une face de l'enveloppe. Le dispositif forme alors le plus souvent une étiquette RFID destinée à être collée sur un support.

Selon un deuxième aspect, l'invention concerne un procédé de réalisation d'un dispositif d'identification par radiofréquence, dans lequel on prévoit un substrat sur une face duquel est réalisée une antenne et disposée une puce connectée à l'antenne, un enrobage recouvrant localement ladite face du substrat au niveau de la puce. Selon une définition générale de l'invention, le procédé comprend en outre les étapes consistant à :
- prévoir une couche intermédiaire réalisée en un matériau hyper conducteur magnétique contenant de la ferrite, possédant des dimensions supérieures à celles de l'antenne et présentant une cavité agencée pour que l'enrobage puisse s'y loger sensiblement totalement ;
- placer la couche intermédiaire contre le substrat, du côté de l'antenne, de sorte que l'antenne soit recouverte par la couche intermédiaire et l'enrobage placé dans la cavité ;
- réaliser une enveloppe autour de l'ensemble formé par le substrat, l'antenne, l'enrobage et la couche intermédiaire.

Selon un mode de réalisation possible, l'enveloppe comprend une première couche placée du côté de la face de la couche intermédiaire opposée au substrat et une deuxième couche placée du côté de la face du substrat opposée à l'antenne, le dispositif d'identification par radiofréquence étant réalisé par laminage de ses différentes couches constitutives.

En variante, l'enveloppe peut être réalisée par moulage.

Selon les cas, la couche et l'enveloppe sont maintenues ensemble par collage ou par laminage.

Selon certaines applications, l'enveloppe recouvre au moins une partie de la surface extérieure d'unobjet. Il est ainsi envisagé que l'enveloppe du dispositif constitue au moins une partie de la couche extérieure de l'objet.

Il peut également être envisagé que l'enveloppe recouvre la totalité de la surface extérieure de l'objet. L'enveloppe forme ainsi la peau de l'objet et le dispositif fait alors partie intégrante de l'objet.

On décrit à présent, à titre d'exemple non limitatif, plusieurs modes de réalisation possibles de l'invention, en référence aux figures annexées :
La figure 1 est une vue en coupe d'une étiquette RFID de l'art antérieur, apposée sur un support ;
La figure 2 est une vue en coupe d'une étiquette RFID selon l'invention, apposée sur un support ;
La figure 3 est une vue en élévation du substrat faisant partie de l'étiquette de la figure 2 ;
La figure 4 est une vue en coupe selon la ligne IV-IV de la figure 3 ;
La figure 5 est une vue en élévation de la couche intermédiaire faisant partie de l'étiquette de la figure 2 ;
La figure 6 est une vue en coupe selon la ligne VI-VI de la figure 5 ;
La figure 7 est une vue en coupe du substrat et de la couche intermédiaire assemblés pour la réalisation de l'étiquette RFID de la figure 2 ;
La figure 8 est une vue en coupe d'une autre forme de réalisation de l'invention.
La figure 2 représente une étiquette RFID 1 apposée sur un support 2, pouvant notamment être métallique. Le support 2 illustré est plan, mais il pourrait être gauche, et par exemple cylindrique.

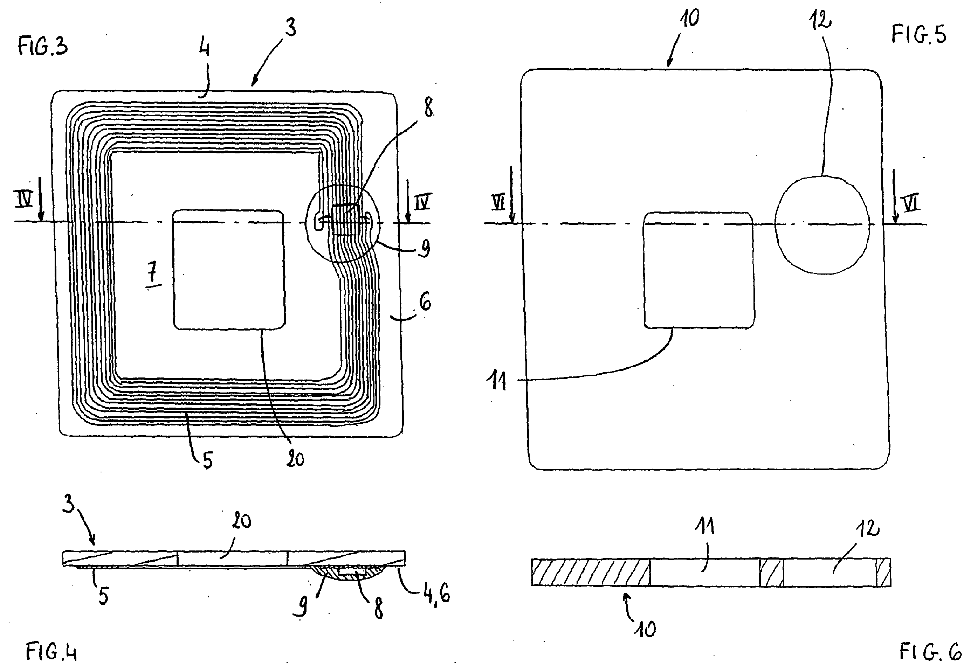

L'étiquette 1 comporte tout d'abord un substrat 3 représenté plus particulièrement sur les figures 3 et 4. Le substrat 3 est ici un film sensiblement carré, de côté voisin de 3 cm, et d'épaisseur pouvant être comprise entre 100 et 200 µm, par exemple de l'ordre de 120 µm ± 10 µm. Le substrat 3 peut être réalisé en un matériau choisi parmi le PET (polyéthylène téréphtalate), le PVC (polychlorure de vinyle), un composite fibre de verre / résine époxy.

Sur une première face 4 du substrat 3 est réalisée une antenne 5. L'antenne 5 est ici réalisée en cuivre selon un enroulement comprenant par exemple 9 tours, et présente une épaisseur de 40 µm ± 10 µm. L'antenne 5 forme sensiblement un carré de côté voisin de 27,35 mm et définit sur le substrat 3 d'une part une bande périphérique 6 de largeur de l'ordre de 1 à 3 mm et d'autre part une zone centrale 7 sensiblement carrée. Dans la zone centrale 7 est ménagé un trou traversant 20 sensiblement central, à distance de l'antenne 5. Ici, le trou traversant 20 présente la forme d'un carré pouvant avoir un côté de 8 à 10 mm).

Une puce 8 est disposée sur le substrat 3 et connectée à l'antenne 5. Un enrobage 9 (potting), par exemple en résine époxy, recouvre la puce 8 ainsi que la zone du substrat 3 et de l'antenne 5 environnant la puce 8. L'enrobage 9 forme ici une goutte sensiblement circulaire de diamètre voisin de 4 mm. L'épaisseur maximale du substrat 3 et de l'enrobage 9 est de l'ordre de 650 µm ± 10 µm. Il est à noter que, sur la figure 3, l'enrobage 9 a été représenté comme s'il était transparent, pour que la puce 8 et les extrémités de l'antenne 5 soient visibles.

L'étiquette 1 comporte également une couche intermédiaire 10, représentée plus particulièrement sur les figures 5 et 6, qui a pour rôle de permettre le bon fonctionnement de l'antenne 5 même en présence de métal dans un environnement proche de l'étiquette 1. Cette couche intermédiaire 10 peut être réalisée en un matériau supra conducteur de radiofréquence contenant de la ferrite. Elle peut être formée à partir d'un film de FLEXIELD ®, commercialisé par la société TDK. Dans la réalisation illustrée, l'épaisseur de la couche intermédiaire 10 est de l'ordre de 500 µm.

La couche intermédiaire 10 forme ici un carré de côté voisin de 4 cm. Elle peut comporter un trou traversant 11 sensiblement central, de dimensions inférieures à celles de la zone centrale 7 du substrat 3, destiné à venir se superposer au trou traversant 20 (donc, par exemple, le trou traversant 11 est un carré de 8 à 10 mm de côté), ainsi qu'un orifice traversant 12. L'orifice 12 est ici sensiblement circulaire, de diamètre voisin de 6 ou 7 mm. Il peut être formé par perforation de la couche intermédiaire 10.

Dans d'autres formes de réalisation de l'invention, il peut être envisagé de doter la couche intermédiaire 10 de supra conducteur d'une unique ouverture qui englobe le trou traversant 11 et l'orifice 12.

Pour la réalisation de l'étiquette 1, la couche intermédiaire 10 est placée contre la face 4 du substrat 3, de sorte que l'enrobage 9 soit logé dans l'orifice 12 et que le trou 11 soit situé en regard du trou 20 de la zone centrale 7 (figure 7). Une bande périphérique 13 de la couche intermédiaire 10 dépasse alors du bord du substrat 3, ce qui permet une protection efficace de l'antenne 5. Cette bande périphérique 13 peut présenter une largeur de 3 à 5 mm, par exemple 4 mm.

Le substrat 3, portant l'antenne 5, la puce 8 et l'enrobage 9, ainsi que la couche intermédiaire 10, sont noyés dans une enveloppe 14 assurant la protection mécanique et thermique de l'antenne 5 et de la puce 8.

L'enveloppe 14 peut être réalisée en un ou plusieurs matériaux choisis parmi les silicones, les polyuréthanes, les polyéthylènes, les polyamides, ou tout autre matériau ayant les propriétés requises selon l'application considérée, notamment en termes de résistance mécanique et thermique.

L'enveloppe 14 est ici constituée d'une première couche 15, disposée du côté de la face de la couche intermédiaire 10 opposée au substrat 3, et d'une deuxième couche 16 disposée du côté de la face 17 du substrat 3 opposée à l'antenne 5. L'épaisseur de chacune des couches 15, 17 peut varier de 300 µm à 500 µm. Les couches 15, 17 présentent en outre des dimensions suffisantes pour dépasser du bord de la couche intermédiaire 10, et pouvoir ainsi être assemblées l'une à l'autre au niveau d'une bande périphérique 18. Cette bande périphérique 18 peut présenter une largeur de 2 à 5 mm, par exemple 3 mm.

Selon un premier mode de réalisation, l'étiquette 1 est réalisée par laminage.

Selon un deuxième mode de réalisation, l'étiquette 1 est réalisée par moulage. Il peut s'agir d'un moulage par injection ou d'un moulage par coulage par gravité, à température ambiante ou avec chauffage.

Quel que soit le mode de réalisation retenu, au cours de la formation de l'étiquette 1, d'une part, la première couche 15 de l'enveloppe 14 vient pénétrer l'orifice 12, noyant ainsi l'enrobage 9. Il est à noter que cela ne provoque pas de sous épaisseur localisée dans l'étiquette 1. D'autre part, les couches 15, 16 de l'enveloppe 14 viennent pénétrer les trous traversants 11, 20, ce qui permet une bonne adhésion de ces couches l'une à l'autre.

Bien que l'enveloppe 14 ait été présentée comme constituée de deux couches 15, 16 distinctes (ce qui est le cas en particulier pour le laminage), 'l'enveloppe 14 peut également n'être formée que d'une seule pièce (par exemple si elle est obtenue par moulage).

L'étiquette 1 peut enfin comprendre une couche d'adhésif 19 solidaire de la première couche 15 de l'enveloppe 14. La couche d'adhésif 19 présente par exemple une épaisseur voisine de 170 µm.

L'étiquette 1 ainsi obtenue se présente globalement sous la forme d'un parallélépipède d'épaisseur inférieure à 2 mm, et par exemple de l'ordre de 1,5 mm. Vue en élévation, l'étiquette 1 forme sensiblement un carré de côté voisin de 4 à 5 cm.

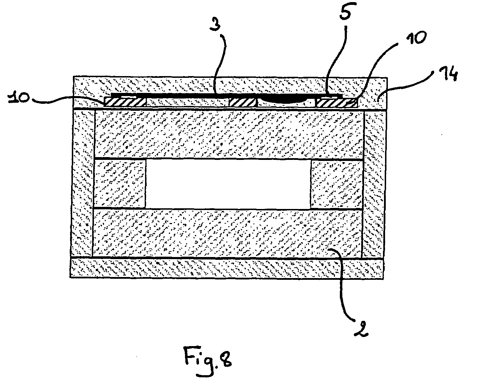

La figure 8 montre une variante de réalisation dans laquelle l'enveloppe 14 recouvre la totalité d'un objet qui forme le support 2 sur lequel l'étiquette 1 est apposée. Comme on peut le voir sur cette figure, l'enveloppe 14 forme alors la surface extérieur

L'objet en question peut être à titre d'exemple illustratif une bouteille de gaz, par exemple, à usage médical pour lequel l'identification revêt un caractère critique. Dans ce cas l'enveloppe 14 est la couche de résine époxy qui est la couche extérieure de l'objet. L'étiquette 1 est ainsi totalement intégrée dans l'objet ce qui est un gage de sécurité puisque aucun arrachement n'est alors possible.

Parmi les avantages et les caractéristiques de l'étiquette - ou plus généralement du dispositif RFID - selon l'invention, on peut citer :
- la possibilité de transmettre des informations sans contact, via l'étiquette, sur une distance de l'ordre de 1 à 5 cm ;
- selon le matériau constitutif de l'enveloppe, la possibilité d'un stockage entre -20°C et +85°C, et la résistance à des températures pouvant atteindre 100, 150, voire 200 ou 250°C pendant plusieurs minutes, permettant l'utilisation pour des équipements de pompier ;
- la perméabilité aux hautes fréquences (plage des 13 MHz) ;
- la résistance mécanique au cisaillement et aux chocs à plat ;
- la souplesse, permettant à l'étiquette d'être collée sur des supports gauches (cylindres de rayon 5 à 15 cm) ;
- la non conductivité électrique ;
- la possibilité d'imprimer des informations sur la face apparente de l'étiquette (logo, numéro de série ou de lot, etc.)
- l'étanchéité à l'eau de mer jusqu'à 20 bars et à l'eau chaude à 80°C comportant des détergents ;
- le fait que l'étiquette est auto extinguible.

Ainsi, l'invention apporte une amélioration déterminante à la technique antérieure, en fournissant un dispositif RFID qui, tout en pouvant être utilisé dans un environnement contenant du métal, est d'épaisseur limitée et ne présente pas de bossage, avec tous les avantages qui en découlent.

Il va de soi que l'invention n'est pas limitée au mode de réalisation décrit ci-dessus à titre d'exemple mais qu'elle en embrasse au contraire toutes les variantes de réalisation couvertes par les revendications. L'invention peut par exemple s'appliquer à des appareils mobiles par exemple de téléphonie pour leur apporter une fonction de paiement sans contact. Dans ce type d'application, il importe d'isoler la fonction de paiement sans contact pour éviter toute interférence avec la partie électronique et/ou métallique d'un appareil téléphonique. L'invention permet ainsi d'embarquer dans un appareil mobile de téléphonie une étiquette RFID ou NFC dans un encombrement extrêmement réduit.

## Revendications

1. Dispositif d'identification par radiofréquence comprenant, noyé dans une enveloppe (14), un substrat (3) sur une face (4) duquel est réalisée une antenne (5) et disposée une puce (8) connectée à l'antenne (5), un enrobage (9) recouvrant localement ladite face (4) du substrat (3) au niveau de la puce (8),
**caractérisé en ce qu'**il comprend en outre, noyé dans l'enveloppe (14), une couche intermédiaire (10) réalisée en un matériau hyper conducteur magnétique contenant de la ferrite, placée contre le substrat (3), du côté de l'antenne (5), ladite couche intermédiaire (10) possédant des dimensions supérieures à celles de l'antenne (5) de sorte à pouvoir la recouvrir, et présentant une cavité (12) agencée pour que l'enrobage (9) et la puce (8) puissent s'y loger sensiblement totalement.

2. Dispositif selon la revendication 1, **caractérisé en ce que** la couche intermédiaire (10) est réalisée en un matériau supra conducteur de radiofréquence contenant de la ferrite.

3. Dispositif selon la revendication 1 ou 2, **caractérisé en ce que** la couche intermédiaire (10) présente une épaisseur comprise entre 200 et 600 µm.

4. Dispositif selon l'une des revendications 1 à 3, **caractérisé en ce que** la cavité ménagée dans la couche intermédiaire (10) est un orifice traversant (12) de diamètre compris entre 4 et 8 mm.

5. Dispositif selon l'une des revendications 1 à 4, **caractérisé en ce que** l'antenne (5) forme un anneau et **en ce que** la couche intermédiaire (10) comporte un trou traversant (11) disposé en regard d'un trou traversant (20) ménagé dans la zone centrale (7) délimitée par l'anneau.

6. Dispositif selon l'une des revendications 1 à 5, **caractérisé en ce que** l'enveloppe (14) est réalisée en un ou plusieurs matériaux choisis parmi les silicones, les polyuréthanes, les polyéthylènes, les polyamides, les résines époxy.

7. Dispositif selon l'une des revendications 1 à 6, **caractérisé en ce que** le substrat (3) est réalisé en un matériau choisi parmi le PET (polyéthylène téréphtalate), le PVC (polychlorure de vinyle), un composite fibre de verre / résine époxy.

8. Dispositif selon l'une des revendications 1 à 7, **caractérisé en ce qu'**il comprend en outre une couche d'adhésif (19) solidaire d'une face de l'enveloppe (14).

9. Procédé de réalisation d'un dispositif d'identification par radiofréquence, dans lequel on prévoit un substrat (3) sur une face (4) duquel est réalisée une antenne (5) et disposée une puce (8) connectée à l'antenne (5), un enrobage (9) recouvrant localement ladite face (4) du substrat (3) au niveau de la puce (8), **caractérisé en ce que** le procédé comprend en outre les étapes consistant à :
- prévoir une couche intermédiaire (10) réalisée en un matériau hyper conducteur magnétique contenant de la ferrite, possédant des dimensions supérieures à celles de l'antenne (5) et présentant une cavité (12) agencée pour que l'enrobage (9) puisse s'y loger sensiblement totalement ;
- placer la couche intermédiaire (10) contre le substrat (3), du côté de l'antenne (5), de sorte que l'antenne (5) soit recouverte par la couche intermédiaire (10) et l'enrobage (9) placé dans la cavité (12) ;
- réaliser une enveloppe (14) autour de l'ensemble formé par le substrat (3), l'antenne (5), l'enrobage (9) et la couche intermédiaire (10).

10. Procédé selon la revendication 9, **caractérisé en ce que** l'enveloppe (14) comprend une première couche (15) placée du côté de la face de la couche intermédiaire (10) opposée au substrat (3) et une deuxième couche (16) placée du côté de la face (17) du substrat (3) opposée à l'antenne (5), le dispositif d'identification par radiofréquence (1) étant réalisé par laminage de ses différentes couches constitutives.

11. Procédé selon la revendication 9, **caractérisé en ce que** l'enveloppe (14) est réalisée par moulage.

12. Procédé selon la revendication 9, **caractérisé en ce que** la couche 15 et l'enveloppe 14 sont maintenues ensemble par collage.

13. Procédé selon la revendication 9, **caractérisé en ce que** la couche 15 et l'enveloppe 14 sont maintenues par laminage.

14. Dispositif selon l'une des revendications 1 à 8, **caractérisé en ce que** le dispositif est disposé sur un objet et **en ce que** l'enveloppe (14) recouvre au moins une partie de la surface extérieure de l'objet.

15. Dispositif selon la revendication 14, **caractérisé en ce que** l'enveloppe (14) recouvre la totalité de la surface extérieure de l'objet.

## Patentansprüche

1. Vorrichtung zur Identifikation durch Funkfrequenz, die, in einem Mantel (14) eingelassen, ein Substrat (3) umfasst, auf dessen einen Seite (4) eine Antenne (5) hergestellt und ein Chip (8) angeordnet ist, der an die Antenne (5) angeschlossen ist, wobei eine Beschichtung (9) die Seite (4) des Substrats (3) im Bereich des Chips (8) lokal abdeckt,
**dadurch gekennzeichnet, dass** sie außerdem, in dem Mantel (14) eingelassen, eine Zwischenschicht (10) umfasst, die aus einem hyperleitenden magnetischen Werkstoff, der Ferrit enthält, die gegen das Substrat (3) der Seite der Antenne (5) platziert ist, hergestellt ist, wobei die Zwischenschicht (10) Maße besitzt, die größer sind als die der Antenne (5), so dass sie abgedeckt werden kann, und einen Hohlraum (12) aufweist, so dass die Beschichtung (9) und der Chip (8) darin im Wesentlichen vollständig untergebracht sind.

2. Vorrichtung nach Anspruch 1, **dadurch gekennzeichnet, dass** die Zwischenschicht (10) aus einem supraleitenden Werkstoff mit Funkfrequenz, der Ferrit enthält, hergestellt ist.

3. Vorrichtung nach Anspruch 1 oder 2, **dadurch gekennzeichnet, dass** die Zwischenschicht (10) eine Stärke zwischen 200 und 600 µm aufweist.

4. Vorrichtung nach einem der Ansprüche 1 bis 3, **dadurch gekennzeichnet, dass** der Hohlraum, der in der Zwischenschicht (10) eingerichtet ist, eine durchgehende Öffnung (12) mit Durchmesser zwischen 4 und 8 mm ist.

5. Vorrichtung nach einem der Ansprüche 1 bis 4, **dadurch gekennzeichnet, dass** die Antenne (5) einen Ring bildet, und dass die Zwischenschicht (10) eine durchgehende Bohrung (11) umfasst, die gegenüber einer durchgehenden Bohrung (20), die in dem zentralen Bereich (7), der von dem Ring abgegrenzt ist, eingerichtet ist, angeordnet ist.

6. Vorrichtung nach einem der Ansprüche 1 bis 5, **dadurch gekennzeichnet, dass** der Mantel (14) aus einem oder mehreren Werkstoffen hergestellt ist, die aus den Silikonen, den Polyurethanen, den Polyethylenen, den Polyamiden, den Epoxidharzen ausgewählt sind.

7. Vorrichtung nach einem der Ansprüche 1 bis 6, **dadurch gekennzeichnet, dass** das Substrat (3) aus einem Werkstoff hergestellt ist, der aus PET (Polyethylenterephthalat), PVC (Polyvinylchlorid), einem Glasfaser-/Epoxidharz-Verbundwerkstoff hergestellt ist.

8. Vorrichtung nach einem der Ansprüche 1 bis 7, **dadurch gekennzeichnet, dass** sie außerdem eine Klebstoffschicht (19), die fest mit einer Seite des Mantels (14) verbunden ist, umfasst.

9. Verfahren zum Herstellen einer Funkfrequenz-Identifikationsvorrichtung, wobei man ein Substrat (3) vorsieht, auf dessen einen Seite (4) eine Antenne (5) hergestellt ist, und ein Chip (8), der mit der Antenne (5) verbunden ist, angeordnet ist, wobei eine Beschichtung (9) die Seite (4) des Substrats (3) im Bereich des Chips (8) lokal abdeckt, **dadurch gekennzeichnet, dass** das Verfahren außerdem die Schritte umfasst, die aus Folgendem bestehen:
- Vorsehen einer Zwischenschicht (10), die aus einem hyperleitenden magnetischen Werkstoff, der Ferrit enthält, hergestellt ist, die Maße besitzt, die größer sind als die der Antenne (5), und einen Hohlraum (12) aufweist, der eingerichtet ist, damit sich die Beschichtung (9) darin im Wesentlichen vollständig unterbringen kann,
- Platzieren der Zwischenschicht (10) gegen das Substrat (3) der Seite der Antenne (5) derart, dass die Antenne (5) durch die Zwischenschicht (10) abgedeckt und die Beschichtung (9) in dem Hohlraum (12) platziert ist,
- Herstellen eines Mantels (14) um die Einheit, die aus dem Substrat (3), der Antenne (5), der Beschichtung (9) und der Zwischenschicht (10) gebildet ist.

10. Verfahren nach Anspruch 9, **dadurch gekennzeichnet, dass** der Mantel (14) eine erste Schicht (15) umfasst, die auf der Seite der Zwischenschicht (10), die dem Substrat (3), entgegengesetzt platziert ist, und eine zweite Schicht (16), die auf der Seite (17) des Substrats (3), die der Antenne (5) entgegengesetzt ist, platziert ist, wobei die Funkfrequenz-Identifikationsvorrichtung (1) durch Walzen der unterschiedlichen Bestandteilschichten hergestellt wird.

11. Verfahren nach Anspruch 9, **dadurch gekennzeichnet, dass** der Mantel (14) durch Formen hergestellt wird.

12. Verfahren nach Anspruch 9, **dadurch gekennzeichnet, dass** die Schicht (15) und der Mantel (14) durch Kleben zusammengehalten werden.

13. Verfahren nach Anspruch 9, **dadurch gekennzeichnet, dass** die Schicht (15) und der Mantel (14) durch Walzen gehalten werden.

14. Vorrichtung nach einem der Ansprüche 1 bis 8, **dadurch gekennzeichnet, dass** die Vorrichtung auf einem Objekt angeordnet ist, und dass der Mantel (14) mindestens einen Teil der äußeren Oberfläche des Objekts abdeckt.

15. Vorrichtung nach Anspruch 14, **dadurch gekennzeichnet, dass** der Mantel (14) die äußere Oberfläche des Objekts vollständig abdeckt.

## Claims

1. A radiofrequency identification device comprising, embedded in a casing (14), a substrate (3) on a face (4) from which an antenna (5) is made and a chip (8) connected to the antenna (5) is disposed, a coating (9) locally covering said face (4) of the substrate (3) at the chip (8),
**characterized in that** it further comprises, embedded in the casing (14), an intermediate layer (10) made of a magnetic hyper-conductive material containing ferrite, placed against the substrate (3), on the side of the antenna (5), said intermediate layer (10) having dimensions greater than those of the antenna (5) in order to be able to cover it, and having a cavity (12) arranged so that the coating (9) and the chip (8) can be substantially totally housed therein.

2. The device according to claim 1, **characterized in that** the intermediate layer (10) is made of a radiofrequency super-conductive material containing ferrite.

3. The device according to claim 1 or 2, **characterized in that** the intermediate layer (10) has a thickness comprised between 200 and 600 µm.

4. The device according to any of claims 1 to 3, **characterized in that** the cavity provided in the intermediate layer (10) is a through orifice (12) having a diameter comprised between 4 and 8 mm.

5. The device according to any of claims 1 to 4, **characterized in that** the antenna (5) forms a ring and **in that** the intermediate layer (10) includes a through hole (11) disposed facing a through hole (20) provided in the central area (7) delimited by the ring.

6. The device according to any of claims 1 to 5, **characterized in that** the casing (14) is made of one or more material(s) selected from silicones, polyurethanes, polyethylenes, polyamides, epoxy resins.

7. The device according to any of claims 1 to 6, **characterized in that** the substrate (3) is made of a material selected from PET (polyethylene terephtalate), PVC (polyvinyl chloride), a glass fiber/epoxy resin composite.

8. The device according to any of claims 1 to 7, **characterized in that** it further comprises an adhesive layer (19) secured to a face of the casing (14).

9. A method for making a radiofrequency identification device, wherein a substrate is provided (3) on a face (4) from which an antenna (5) is made and a chip (8) connected to the antenna (5) is disposed, a coating (9) covering locally said face (4) of the substrate (3) at the chip (8), **characterized in that** the method further comprises the steps of:
- providing an intermediate layer (10) made of a magnetic hyper-conductive material containing ferrite, having dimensions greater than those of the antenna (5) and having a cavity (12) arranged so that the coating (9) can be substantially totally housed therein;
- placing the intermediate layer (10) against the substrate (3), on the side of the antenna (5), so that the antenna (5) is covered by the intermediate layer (10) and the coating (9) is placed in the cavity (12);
- achieving a casing (14) around the assembly formed by the substrate (3), the antenna (5), the coating (9) and the intermediate layer (10).

10. The method according to claim 9, **characterized in that** the casing (14) comprises a first layer (15) placed on the side of the face of the intermediate layer (10) opposite to the substrate (3) and a second layer (16) placed on the side of the face (17) of the substrate (3) opposite to the antenna (5), the radiofrequency identification device (1) being made by laminating its different constituent layers.

11. The method according to claim 9, **characterized in that** the casing (14) is made by molding.

12. The method according to claim 9, **characterized in that** the layer 15 and the casing 14 are held together by bonding.

13. The method according to claim 9, **characterized in that** the layer 15 and the casing 14 are held by lamination.

14. The device according to any of claims 1 to 8, **characterized in that** the device is disposed on an object and **in that** the casing (14) covers at least a portion of the outer surface of the object.

15. The device according to claim 14, **characterized in that** the casing (14) covers the entire outer surface of the object.
